(19) Europäisches Patentamt
European Patent Office
Office européen des brevets

(11) **EP 3 882 484 B1**

(12) **EUROPEAN PATENT SPECIFICATION**

(45) Date of publication and mention
of the grant of the patent:
**14.08.2024 Bulletin 2024/33**

(21) Application number: **21162815.1**

(22) Date of filing: **16.03.2021**

(51) International Patent Classification (IPC):
*F16H 7/02* *(2006.01)*

(52) Cooperative Patent Classification (CPC):
**F16H 7/02; F16H 7/14; G03B 17/02;**
**G08B 13/1963;** F16H 2007/0808; F16H 2007/0865;
F16H 2007/0893; G03B 37/02; G03B 2217/002

(54) **CAMERA ASSEMBLY**

**KAMERAANORDNUNG**

**ENSEMBLE CAMÉRA**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **16.03.2020 KR 20200031832**

(43) Date of publication of application:
**22.09.2021 Bulletin 2021/38**

(73) Proprietor: **Hanwha Vision Co., Ltd.**
**Seongnam-si, Gyeonggi-do 13488 (KR)**

(72) Inventors:
• **Kim, Chang Yeon**
**Seongnam-si, Gyeonggi-do (KR)**
• **Lee, Byeong Ho**
**Seongnam-si, Gyeonggi-do (KR)**
• **Yu, Hye Jin**
**Seongnam-si, Gyeonggi-do (KR)**

(74) Representative: **Gulde & Partner**
**Patent- und Rechtsanwaltskanzlei mbB**
**Wallstraße 58/59**
**10179 Berlin (DE)**

(56) References cited:
WO-A1-2013/166083    CN-A- 108 626 333
US-A- 4 631 044    US-A- 5 214 448
US-A1- 2001 046 915    US-A1- 2008 012 980

**Description**

BACKGROUND

1. Field

The invention relates to a camera assembly, and more specifically, to a camera assembly for transmitting via a timing belt the driving power from a motor to an output shaft coupled to a camera module.

2. Description of the Related Art

A surveillance camera supporting pan/tilt/zoom functions needs to transmit the driving power generated from a stepping motor to the output shaft. In order to transmit such a driving power, a timing belt is normally used to couple a motor shaft of the stepping motor and the output shaft.

By using the timing belt as a power transmission structure, a user can easily adjust a gear ratio and an axial distance. However, in terms of the power transmission, there is an important requirement that the tension of the timing belt should be maintained in an optimal state. In case that the tension of the timing belt is too low, there might be problems of shaking of a camera and slip or malfunctioning of a motor. On the contrary, in case that the tension of the timing belt is too high, there might be problems of wear-out or damages of components in the camera assembly and a power reduction of the motor due to a load increase.

In this regard, there might be two schemes to solve the problem. The first scheme is to maintain the tension of the timing belt within a designed range by strict quality controls on dimensions and clearances of the related components. In addition, the second scheme is to adjust the tension of the timing belt by manual controls on the axial distance during the assembling process.

According to the first scheme, it is necessary to manage the size, clearance and axial distance of a pulley in order to maintain the tension of the timing belt, but it inevitably results in a cost increase for quality controls on some components and a risk from defective products.

On the other hand, the second scheme has an advantage of reducing a defect rate by lowering the standard of clearance management on the related components when adjusting the axial distance during an assembling process for managing the tension of the timing belt. However, it requires an additional dedicated device for applying a proper tension during the assembling process. Additionally, it is inappropriate for disassembling and reassembling the camera assembly and unable to deal with the problem that the axial distance changes due to an external force after completing the assembling process.

Further, even after a proper tension is applied to the timing belt, a decentering or an eccentricity may be caused due to a setting angle of the camera assembly and surroundings around the camera assembly, which might cause a deviation of the tension of the timing belt from the designed value.

WO 2013166083A1 discloses a positioning device comprising a motor, a motor shaft, a belt, a pulley and an elastic member. US 2008/0012980 A1 represents the most relevant relevant prior art.

SUMMARY

Provided is a camera assembly in which the tension of the timing belt is adaptively adjusted without unnecessary efforts such as strict clearance managements for components during an assembling process or adjustments of an axial distance.

Also provided is a camera assembly in which the tension of the timing belt is adaptively adjusted in spite of changes in the setting angle of the camera assembly or surroundings around the camera assembly.

However, aspects of the inventive concept are not restricted to those set forth herein. Various other aspects of the inventive concept will become more apparent to one of ordinary skill in the art to which the embodiments of the inventive concept pertain by referencing the detailed description of the embodiments given below.

According to an aspect of an embodiment, there is provided a camera assembly as defined in claim 1. The fixed shaft may be received in a corresponding slot on the movable member in order to support the sliding motion of the movable member.

An end of the elastic member may be coupled to the base and the other end of the elastic member may be coupled to the movable member in order to cause a tension in the elastic member.

The point where the end of the elastic member is coupled to the base may be farther from the second axis than the point where the other end of the elastic member is coupled to the movable member.

The base may have a first hollow and the movable member may have a second hollow axially corresponding to the first hollow, and the motor shaft may pass through the first and second hollows.

The belt may engage with the end of the motor shaft passing through the first and second hollows.

A pinion may be formed at the end of the motor shaft and gear teeth may be formed at the outer circumferential surface of the pulley, and the threads defined at inner surface of the belt may engage with the pinion and the gear teeth.

The head of the fixed shaft may be positioned higher than the movable member mounted on the base in order to allow the movable member to rotate on the fixed shaft relative to the base even when the fixed shaft is coupled to the base.

The camera assembly may further include at least one fastener configured to fixedly couple the motor and the movable member, wherein the head of at least one fastener may be received in a through hole with a clearance, which guarantees a contact between the base and the movable member without interrupting the turning motion of the movable member.

BRIEF DESCRIPTION OF THE DRAWINGS

FIG. 1 is an assembled perspective view of a camera assembly according to an embodiment.

FIG. 2 is an exploded perspective view of the camera assembly according to an embodiment.

FIG. 3 is a top view of the camera assembly according to an embodiment.

FIG. 4 is a top view showing only the base, the movable member and elastic member from the camera assembly according to an embodiment.

FIG. 5 is a drawing illustrating a connection between the movable member and the base according to an embodiment.

FIG. 6 is a view of the camera assembly without the lower case in the direction E.

FIG. 7 is a longitudinal sectional view taken from the camera assembly of FIG. 6 along the vertical direction.

FIG. 8 is a bottom view of the camera assembly according to an embodiment without a lower case.

DETAILED DESCRIPTION

Benefits and features of the invention, and methods for accomplishing the same will become apparent with reference to embodiments described below in detail in conjunction with the accompanying drawings.

Unless otherwise defined, all terms (including technical and scientific terms) used herein may be used in a sense that may be commonly understood by those of ordinary skill in the art. In addition, the terms defined in the commonly used dictionaries are not ideally or excessively interpreted unless they are specifically defined clearly.

Herein, the singular also includes the plural unless specifically stated otherwise in the phrase. The term "comprises" and/or "comprising" as used herein does not exclude the presence or addition of one or more other components in addition to the mentioned components. As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Hereinafter, exemplary embodiments of the present invention will be described in detail with reference to the accompanying drawings.

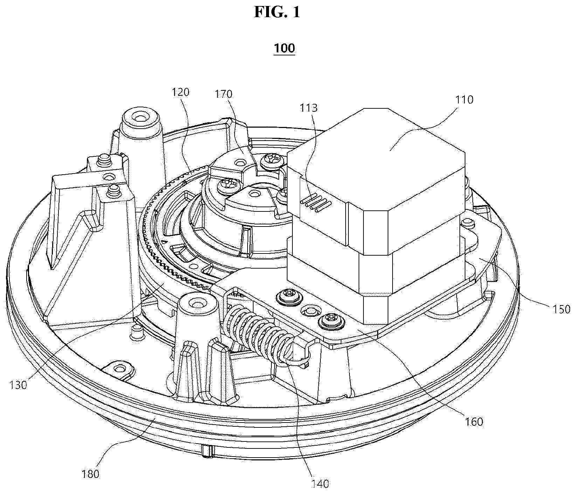

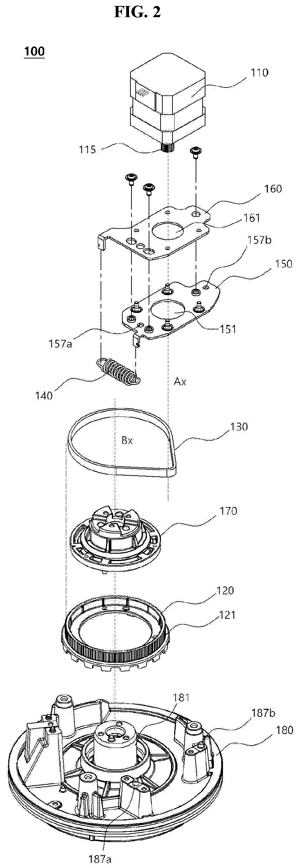

FIG. 1 is an assembled perspective view of a camera assembly 100 according to an embodiment. FIG. 2 is an exploded perspective view of the camera assembly 100. The camera assembly 100 may include a motor 110, pulley 120, a timing belt 130, an elastic member 140, a base 150 and a movable member 160.

The driving power generated by the motor 110 may be transmitted to the motor shaft 115 which extends along a first axis Ax and rotates by the driving power of the motor 110. In this regard, the motor 110 may be connected to a power supply (not shown) via terminals 113 in order to receive power from the power supply.

Such driving power can be transmitted via the timing belt 130 to the pulley 120 which rotates around a second axis Bx spaced from the first axis Ax. Specifically, the timing belt 130 couples the motor shaft 115 to the pulley 120, and converts the rotation of the motor shaft 115 to the rotation of the pulley 120. Thus, a portion proximate to the first axis Ax of the timing belt 130 is coupled to the motor shaft 115, and another portion surrounding the second axis Bx of the timing belt 130 is coupled to the outer circumferential surface of the pulley 120.

A bracket 170 on which a camera module (not shown) is mounted may be fixedly coupled with the pulley 120 and rotates together with the pulley 120. Thus, the camera module rotates according to the rotation of the pulley 120.

In this regard, the elastic member 140 applies a biasing force in the direction in which the first axis Ax is away from the second axis Bx. The elastic member 140 of FIGS. 1 and 2 is illustrated as a coil spring, but it is not limited to the coil spring. It can be replaced with other flexible members as long as they are capable of applying tensions. According to a preferred embodiment, the base 150 and the movable member 160 can be used such that the elastic member 140 applies such a force to the motor shaft 115.

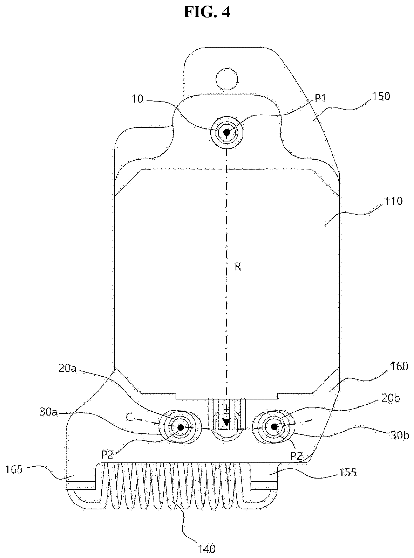

Specifically, the movable member 160 may be fixedly coupled to the motor 110 and rotatably coupled to the base 150. A specific mechanism for such tilting motion will be described later in reference to FIG. 4. An end of the elastic member 140 may be coupled to a point of the base 150, and the other end of the elastic member 140 may be coupled to a point of the movable member 160, which forms a tension within the elastic member 140 functioning as a bias force.

As such, based on to an interaction of the movable member 160, the base 150 and the elastic member 140, the tension of the belt 130 and the biasing force of the elastic member 140 are balanced such that the distance between the first axis and the second axis is adaptively adjusted. Here, the tension of the belt 130 is a force applied in a direction in which the motor shaft 115 is closer to the second axis Bx and the biasing force of the elastic member 140 is a force applied in a direction in which the motor shaft 115 is away from the second axis Bx.

Referring again to FIG. 2, the camera assembly further includes a bracket 170. The pulley 120 and the bracket 170 may be rotatably supported on a support member 181 of the lower case 180 of the housing. The second axis Bx may be an axis around which the pulley 120 is rotatably supported on the lower case 180. For brevity, outer components such as the upper case of the housing other than the lower case 180 of the housing are not shown in FIGS. 1 and 2.

As described above, in order to adaptively adjust the position of the motor shaft 115 under the biasing force of the elastic member 140, the base 150 and the movable member 160 can be used. First, the base 150 is fixed on the housing of the camera assembly 100. Referring to FIG. 2, through holes 157a, 157b formed on the base 150 may be coupled to corresponding protrusions 187a, 187b formed on the lower case 180 such that the base 150 is fixed on the housing. Such protrusions 187a, 187b may be coupled to the through holes 157a, 157b by interference fit, but the scope of the disclosure is not limited to the example and other separate fasteners can be used as well.

In FIG. 2, each of the base 150 and the movable member 160 includes a hollow 151, 161, and each hollow 151, 161 is formed at the corresponding position. In this regard, the motor shaft 115 is disposed to pass through each hollow 151, 161. Thus, the timing belt 130 is coupled to the end of the motor shaft 115 having passed through each hollow 151, 161.

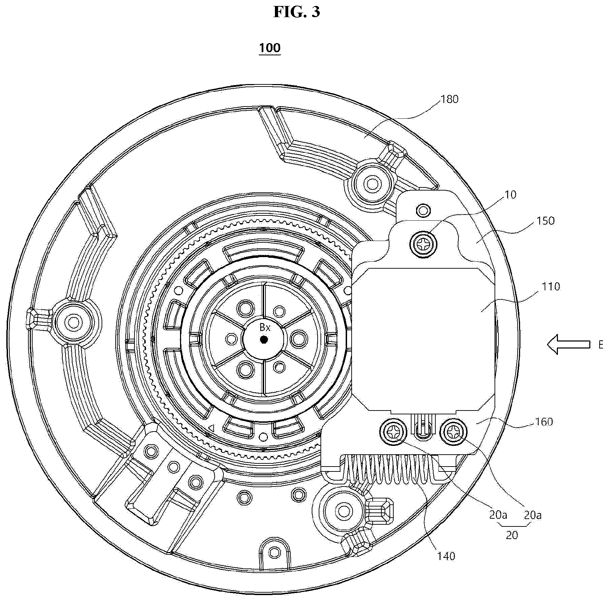

FIG. 3 is a top view of the camera assembly 100 of FIG. 1. FIG. 4 is a top view showing only the base 150, the movable member 160 and elastic member 140 among the camera assembly 100. Here, the base 150 is fixed on the lower case 180 without relative motion, but the movable member 160 and the motor 110 which are fixedly coupled to each other are configured to turning on the fixed shaft 10 of the base 180 within a predetermined range.

Specifically, the fixed shaft 10 rotatably couples the movable member 160 to the first point P1 of the base 150. In this regard, at least one movable shaft 20a, 20b is spaced from the first point P1, coupled to the base 150 at the second point P2 and received in the corresponding slots 30a, 30b on the movable member 160, and supports the sliding motion of the movable member 160.

Preferably, the movable shaft 20 includes two movable shafts 20a, 20b, the slot 30 includes two slots 30a, 30b, and each of the two movable shafts 20a, 20b is received in each of the two slot 30a, 30b. As such, it is preferrable to use two or more movable shafts and slots because relative shakings can be generated in the direction R of FIG. 4 in case that only one movable shaft and one slot are used.

When the movable member 160 rotates on the fixed shaft 10, the movable shafts 20a, 20b need to be received in the slots 30a, 30b without interference while supporting the sliding motion of the movable member 160. To this end, each slot 30a, 30b of FIG. 4 receives each movable shaft 20a, 20b and is elongated in the circumferential direction C according to the rotation radius R on the first point P1. Thus, even though the movable member 160 rotates on the first point P of the base 150 with a predetermined angle, there is no interference between the movable shafts 20a, 20b and the slots 30a, 30b.

In FIGS 3 and 4, the slot 30a, 30b is formed on the movable member 160 and the movable shaft is formed on the base 150, but the same function is also implemented by the opposite configuration. According to another embodiment, the movable shaft may be formed on the movable member 160 at the second point P2 and received in the corresponding slot on the base 150 in order to support the sliding motion of the movable member 160.

Meanwhile, an end of the elastic member 140 is coupled to a latch 165 protruded from the movable member 160 and the other end of the elastic member 140 is coupled to a latch 155 protruded from the base 150. In this regard, the latch 155 of the base 150 is positioned farther from the second axis Bx than the latch 165 of the movable member 160. Thus, when the movable member 160 turns clockwise on the first position P1, that is, the motor shaft 115 moves toward the second axis Bx in the left direction of FIG. 4, the elastic member 140 is stretched to have a tension therein. As a result, the tension of the elastic member 140 functions as a bias force to resist the movement and is balanced with the tension of the timing belt 130. As describe above, the elastic member 140 is configured to generate the tension as a bias force between the movable member 160 and the base 150, but the scope of the disclosure is not limited to this example and the compressive force of the elastic member 140 can be used as the bias force as well.

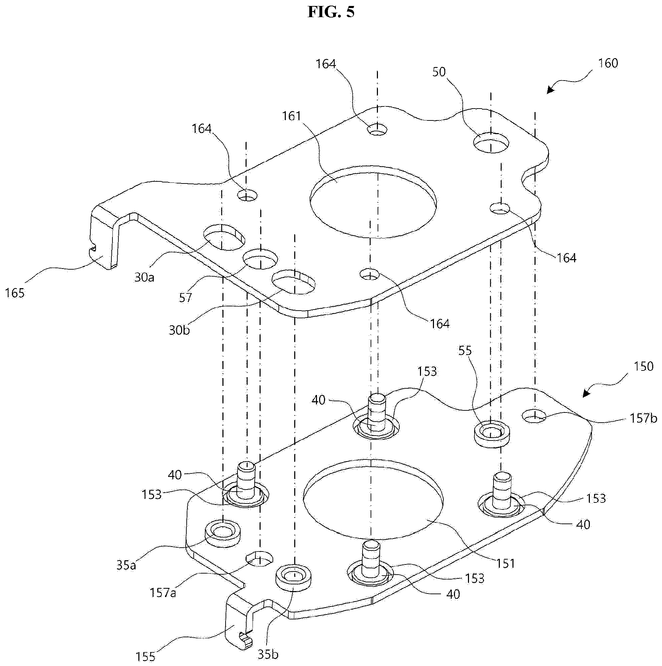

FIG. 5 is a drawing illustrating a connection between the movable member 160 and the base 150 according to an embodiment. The through holes 157a, 157b formed on the base 150 are coupled to the protrusion 187a, 187b of the lower case 180. To this end, the through hole 57 has a clearance around the end of the protrusion 187a such that the end of the protrusion 187a passing through the through hole 157a does not cause any interference. In addition, the protrusion 187b passing through the through hole 157b does not overlap with the movable member 160 positioned above the base 150 and thus it does not interrupt the movement of the movable member 160.

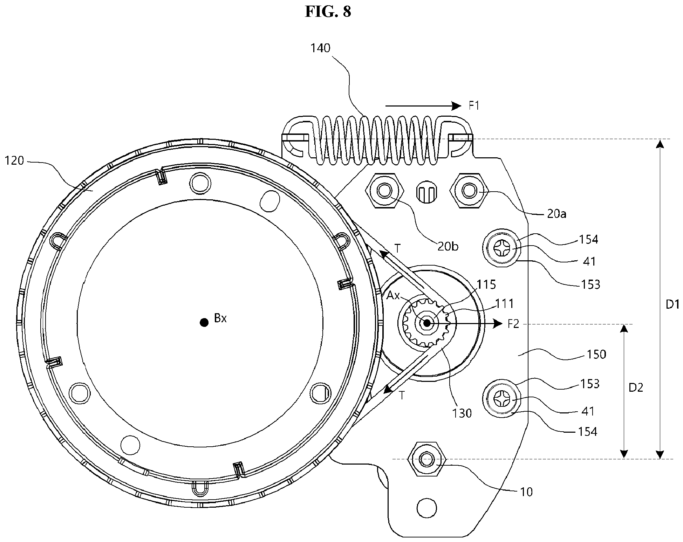

Next, at least one fastener 40 passes through the through hole 164 formed on the movable member 160 and is coupled with the motor 110 such that the motor 110 is completely fixed on the movable member 160. In addition, the head (41 in FIG. 8) of the at least one fastener 40 is received in the through hole 153 having a clearance (154 in FIG. 8) to the base 150, which guarantees a face-to-face contact between the base 150 and the movable member 160 without interrupting the turning motion of the movable member 160.

Without through hole 153 with such a clearance 154, the movable member 160 and the base 150 would not completely contact to each other. In addition, without the clearance 154 of the through hole 153, the turning motion of the movable member 160 would be interrupted due to the interference between the through hole 153 and the fastener head 41.

Additionally, as described above, the through hole 50 of the movable member 160 and the through hole 55 of the base 150 are used to receive the fixed shaft 10, and the slots 30a, 30b of the movable member 160 and the through holes 35a, 35b of the base 150 are used to receive the movable shaft 20a, 20b. Lastly, the latch 165 formed at a side of the movable member 160 and the latch 155 formed at a side of the base 150 are connected to both ends of the elastic member 140.

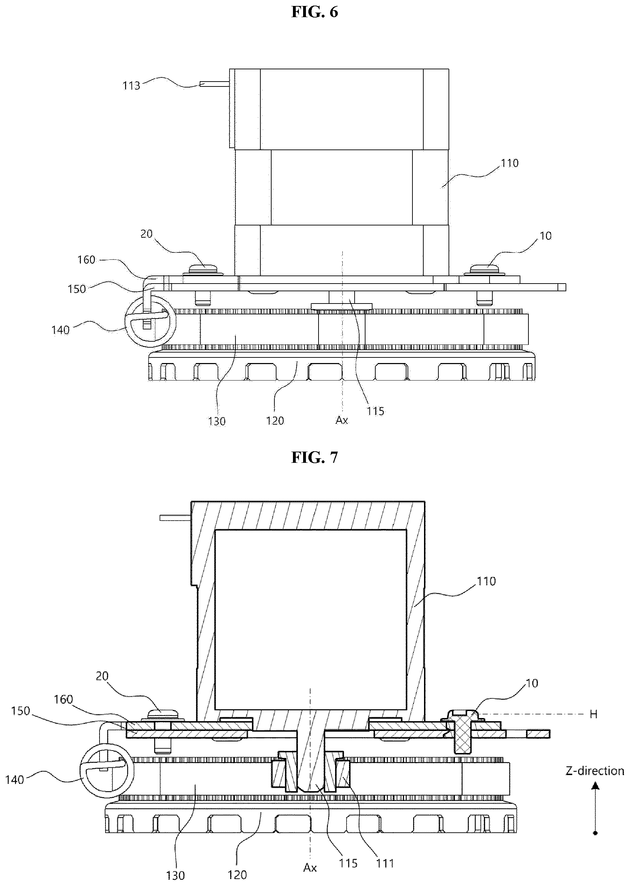

FIG. 6 is a view of the camera assembly 100 without the lower case 180 in the direction E and FIG. 7 is a longitudinal sectional view taken from the camera assembly 100 of FIG. 6 along the vertical direction.

The motor shaft 115 is extended from the motor 110 in the direction along the first axis Ax, and a pinion 111 is defined at the end of the motor shaft 115 to be coupled with the timing belt 130. The rotation of the pinion 111 causes a revolution of the timing belt 130 and the pulley 120 engaged with the timing belt 130 also rotates accordingly. To this end, the diameter of the pinion 111 is quite smaller than the diameter of the pulley 120, which may generates a speed reduction and a torque increase . The rotation amount of the pulley 120 can be detected by a rotation sensor and controlled by a motor controller not shown in the drawings.

Referring to FIG. 7, the fixed shaft 10 and the movable shaft 20 are implemented, for example, by pins and jointly couple the movable member 160 rotatably on the base 150. Here, each pin may be installed without contact with elements other than the movable member 160 and the base. The fixed shaft 10 and the movable shaft 20, in particular, the head H of the pin defining the fixed shaft 10 may be positioned higher than the movable member 160 mounted on the base 150 in a Z-direction. Thus, even though the fixed shaft 10 is completely coupled to the base 150, the movable member 160 is allowed to rotate on the fixed shaft 10 of the base 150.

FIG. 8 is a bottom view of the camera assembly 100 of FIG. 1 without a lower case 180. Referring to FIG.8, a pinion 111 is defined at the end of the motor shaft 115 forming the first axis Ax and threads (not shown) on the inner side of the timing belt 130 engages with the pinion 111. In the same way, threads (not shown) on the inner side of the timing belt 130 also engages with the gear teeth (121 in FIG. 2) on the outer circumferential surface of the pulley 120.

To this end, the biasing force F1 generated from the elastic member 140 installed between the movable member 160 and the base 150, and the tension T generated in the timing belt 130 are adaptively balanced. Accordingly, even when such a balance is broken for some reasons, the distance between the first axis Ax and the second axis Bx is adjusted by itself and balanced again at another equilibrium point.

For example, in case that the tension of the timing belt 130 is too high, it becomes greater than the bias force of the elastic member 140 and the motor shaft 115 or the first axis Ax moves toward the second axis Bx. Accordingly, the tension T of the timing belt 130 would be decreased as a result. On the contrary, in case that the tension of the timing belt 130 is too low, it becomes less than the bias force of the elastic member 140 and the motor shaft 115 or the first axis Ax moves away from the second axis Bx. Accordingly, the tension T of the timing belt 130 would be increased as a result. Thus, if the intrinsic bias of the elastic member 140 is set to be a proper value, the tension of the timing belt 130 would be consistently maintained in spite of error factors such as dimensions of components and eccentricity caused during an assembling process.

In a specific design, the biasing force F1 of the elastic member 140 can be estimated from a force balance equation in order to maintain the tension T of the timing belt 130 within a desired range. If you assume the tension of the timing belt 130 to be "T" and the reaction force of the motor shaft 115 to be "F2", the following equation 1 is satisfied.

[Equation 1]

$$F2 = 2 \times T \times \cos\left(\frac{\theta}{2}\right)$$

Here, $\theta$ is an angle formed by two parts of the timing belt which pulls the motor shaft 115.

In addition, "F1" can be expressed by "F2" via a torque balance equation with reference to the fixed shaft 10, as shown in the following equation 2.

[Equation 2]

$$F1 = \frac{F2 \times D2}{D1}$$

By combining the equations 1 and 2, you can express "F1" by "T" as shown in the following equation 3 in the end.

[Equation 3]

$$F1 = \frac{2 \times D2 \times T \times \cos\left(\frac{\theta}{2}\right)}{D1}$$

According to the equation 3, you can estimate the bias force, that is, the tension of the elastic member 140 based on a designed tension T of the timing belt 130. According to a preferred embodiment, the tension T of the timing belt 130 needs to be equal to or 1.3 times greater than the maximum driving power of the motor 110.

According to an embodiment, the camera assembly described above may be assembled by using the following method. Referring to FIGS. 2, 4 and 5 again, first, the motor 110 and the movable member 160 are fixedly coupled by the fastener 40 and the movable member 160 is rotatably coupled to the base 150. To this end, the fixed shaft 10 is coupled to the first point P1 of the base 150 such that the movable member 160 can be rotatable on the fixed shaft 10, and each of two movable shafts 20a, 20b installed on the base 150 is received in each of two slots 30a, 30b defined in the movable member 160. As such, when the motor 110 and the movable member 160 are installed on the base 150, the motor shaft 115 extended from the motor 110 passes through both the hollow 161 of the movable member 160 and the hollow 151 of the base 150.

Next, the elastic member 140 is installed such that both ends of the elastic member 140 are interposed between a point of the movable member 160 and another point of the base 150. In addition, the base 150 on which the motor 110 and the movable member 160 are installed is fixedly coupled to the housing at some positions 187a, 187b.

Lastly, the motor shaft 115 extended from the motor "110 and the pulley 120 on which the camera module is mounted are coupled in common by the timing belt 130. As such, when the coupling by the timing belt is completed, the tension of the timing belt and the bias force from the elastic member 140 become balanced. Specifically, the tension of the timing belt 130 applying a force in the direction in which the motor shaft 115 is closer to the rotation axis Bx of the pulley 120, and the biasing force of the elastic member 140 applying a force in the direction in which the motor shaft 115 is away from the rotation axis Bx becomes balanced. Accordingly, the tension applied to timing belt 130 can be adaptively maintained within a designed range.

According to the above embodiments, it is possible to apply a proper tension to the timing belt without separate assembling tools and adaptively manage the tension of the timing belt within a designed range despite various distributions in the related components.

Additionally, even though there is a little decentering or eccentricity in some components when installing the camera assembly in site, the tension variation in the timing belt can be minimized and the same tension can be applied again even after reassembling the camera assembly.

Claims

1. A camera assembly comprising:

a motor (110) configured to generate a driving power;
a motor shaft (115) configured to define a first axis (Ax) extending from the motor and to rotate by the driving power of the motor (110);
a pulley (120) configured to rotate on a second axis (Bx) spaced from the first axis (Ax) according to the rotation of the motor shaft (115);
a belt (130) configured to couple the motor shaft (115) to the pulley (120) and to convert the rotation of the motor into a rotation of the pulley;
a camera module configured to be mounted on the pulley (120) and to rotate together with the pulley (120),
**characterized in that** the camera assembly further includes,
an elastic member (140) configured to apply a biasing force to the motor shaft (115) such that the motor shaft (115) is away from the second axis (Bx),
a base (150) configured to be fixed at a side of a housing of the camera assembly;

a movable member (160) configured to be fixedly coupled to the motor (110) and to be rotatably mounted on the base,

a fixed shaft (10) configured to rotatably mount the movable member (160) on a first point of the base (150); and

a movable shaft (20a, 20b) configured to be coupled to the base (150) at a second point spaced from the first point, wherein the movable shaft (20a, 20b) comprises two movable shafts that are received in a first corresponding slot and a second corresponding slot, respectively, and the first corresponding slot and the second corresponding slot are in the movable member (160) such as to support sliding motion of the movable member (160), and wherein the first corresponding slot and the second corresponding slot are elongated in a circumferential direction according to a same rotation radius extending from the first point,

wherein the camera assembly is configured that a tension of the belt (130) and the biasing force of the elastic member (140) are balanced such that a distance between the first axis (Ax) and the second axis (Bx) is adaptively adjusted, the tension of the belt (130) being a force applied in a direction in which the motor shaft moves close to the second axis (Bx) and the biasing force of the elastic member (140) being a force applied in a direction in which the motor shaft (115) moves away from the second axis (Bx).

2. The camera assembly of claim 1,
wherein the fixed shaft (10) configured to be received in a corresponding slot on the base (150) in order to support the sliding motion of the movable member (160).

3. The camera assembly of claim 1, wherein the camera assembly is configured that the movable shaft (20a, 20b) is received in the slot without an interference while supporting the sliding motion of the movable member, when the movable member rotates on the fixed shaft (10).

4. The camera assembly of claim 1, wherein an end of the elastic member (140) is coupled to the base (150) and the other end of the elastic member (140) is coupled to the movable member in order to cause a tension in the elastic member (140).

5. The camera assembly of claim 4, wherein the point where the end of the elastic member (140) is coupled to the base is farther from the second axis (Bx) than the point where the other end of the elastic member (140) is coupled to the movable member.

6. The camera assembly of claim 1, wherein the base (150) has a first hollow and the movable member has a second hollow axially corresponding to the first hollow, and the motor shaft (115) passes through the first and second hollows.

7. The camera assembly of claim 6, wherein the belt (130) engages with the end of the motor shaft (115) passing through the first and second hollows.

8. The camera assembly of claim 7, wherein a pinion is formed at the end of the motor shaft (115) and gear teeth are formed at the outer circumferential surface of the pulley (120), and the threads defined at inner surface of the belt (130) engages with the pinion and the gear teeth.

9. The camera assembly of claim 1, wherein a head of the fixed shaft (10) is positioned higher than the movable member mounted on the base (150) in order to allow the movable member to rotate on the fixed shaft relative to the base (150) even when the fixed shaft (10) is coupled to the base.

10. The camera assembly of claim 1, further comprising at least one fastener configured to fixedly couple the motor (110) to the movable member,
wherein a head of at least one fastener is received in a through hole with a clearance to guarantee a contact between the base (150) and the movable member without interrupting a turning motion of the movable member.

**Patentansprüche**

1. Kameraanordnung, umfassend:

einen Motor (110), der dazu ausgestaltet ist, eine Antriebsleistung zu erzeugen;
eine Motorwelle (115), die dazu ausgestaltet ist, eine erste Achse (Ax), die sich vom Motor aus erstreckt, zu definieren und sich durch die Antriebsleistung des Motors (110) zu drehen;

eine Riemenscheibe (120), die dazu ausgestaltet ist, sich auf einer von der ersten Achse (Ax) beabstandeten zweiten Achse (Bx) entsprechend der Drehung der Motorwelle (115) zu drehen;

einen Riemen (130), der dazu ausgestaltet ist, die Motorwelle (115) an die Riemenscheibe (120) zu koppeln und die Drehung des Motors in eine Drehung der Riemenscheibe umzuwandeln;

ein Kameramodul, das dazu ausgestaltet ist, an der Riemenscheibe (120) montiert zu sein und sich zusammen mit der Riemenscheibe (120) zu drehen,

**dadurch gekennzeichnet, dass** die Kameraanordnung ferner Folgendes umfasst:

ein elastisches Element (140), das dazu ausgestaltet ist, eine Vorspannkraft auf die Motorwelle (115) auszuüben, so dass die Motorwelle (115) von der zweiten Achse (Bx) entfernt ist;

eine Basis (150), die dazu ausgestaltet ist, an einer Seite eines Gehäuses der Kameraanordnung befestigt zu sein;

ein bewegliches Element (160), das dazu ausgestaltet ist, fest an den Motor (110) gekoppelt und drehbar an der Basis montiert zu sein,

eine feste Welle (10), die dazu ausgestaltet ist, das bewegliche Element (160) drehbar an einem ersten Punkt der Basis (150) zu befestigen; und

eine bewegliche Welle (20a, 20b), die dazu ausgestaltet ist, an einem vom ersten Punkt beabstandeten zweiten Punkt an die Basis (150) gekoppelt zu sein,

wobei die bewegliche Welle (20a, 20b) zwei bewegliche Wellen umfasst, die in einem ersten entsprechenden Schlitz bzw. einem zweiten entsprechenden Schlitz aufgenommen sind, und wobei sich der erste entsprechende Schlitz und der zweite entsprechende Schlitz so im beweglichen Element (160) befinden, dass sie eine Gleitbewegung des beweglichen Elements (160) unterstützen, und

wobei der erste entsprechende Schlitz und der zweite entsprechende Schlitz in einer Umfangsrichtung gemäß einem gleichen Rotationsradius, der sich vom ersten Punkt aus erstreckt, langgestreckt sind, wobei die Kameraanordnung so ausgestaltet ist, dass eine Spannung des Riemens (130) und die Vorspannkraft des elastischen Elements (140) so ausbalanciert sind, dass ein Abstand zwischen der ersten Achse (Ax) und der zweiten Achse (Bx) adaptiv eingestellt ist, wobei es sich bei der Spannung des Riemens (130) um eine Kraft handelt, die in einer Richtung ausgeübt wird, in der sich die Motorwelle auf die zweite Achse (Bx) zubewegt, und es sich bei der Vorspannkraft des elastischen Elements (140) um eine Kraft handelt, die in einer Richtung ausgeübt wird, in der sich die Motorwelle (115) von der zweiten Achse (Bx) weg bewegt.

2. Kameraanordnung nach Anspruch 1,
   wobei die feste Welle (10) dazu ausgestaltet ist, in einem entsprechenden Schlitz an der Basis (150) aufgenommen zu sein, um die Gleitbewegung des beweglichen Elements (160) zu unterstützen.

3. Kameraanordnung nach Anspruch 1, wobei die Kameraanordnung so ausgestaltet ist, dass die bewegliche Welle (20a, 20b) ohne Störung im Schlitz aufgenommen wird, während sie die Gleitbewegung des beweglichen Elements unterstützt, wenn sich das bewegliche Element auf der festen Welle (10) dreht.

4. Kameraanordnung nach Anspruch 1, wobei ein Ende des elastischen Elements (140) an die Basis (150) gekoppelt ist und das andere Ende des elastischen Elements (140) an das bewegliche Element gekoppelt ist, um eine Spannung im elastischen Element (140) zu erzeugen.

5. Kameraanordnung nach Anspruch 4, wobei der Punkt, an dem das Ende des elastischen Elements (140) an die Basis gekoppelt ist, weiter von der zweiten Achse (Bx) entfernt ist als der Punkt, an dem das andere Ende des elastischen Elements (140) an das bewegliche Element gekoppelt ist.

6. Kameraanordnung nach Anspruch 1, wobei die Basis (150) eine erste Vertiefung aufweist und das bewegliche Element eine der ersten Vertiefung axial entsprechende zweite Vertiefung aufweist und wobei die Motorwelle (115) durch die erste und die zweite Vertiefung verläuft.

7. Kameraanordnung nach Anspruch 6, wobei der Riemen (130) mit dem Ende der Motorwelle (115), das durch die erste und die zweite Vertiefung verläuft, in Eingriff steht.

8. Kameraanordnung nach Anspruch 7, wobei am Ende der Motorwelle (115) ein Ritzel ausgebildet ist und an der Außenumfangsfläche der Riemenscheibe (120) Zahnradzähne ausgebildet sind und die an der Innenfläche des Riemens (130) definierten Gewindegänge mit dem Ritzel und den Zahnradzähnen in Eingriff stehen.

9.  Kameraanordnung nach Anspruch 1, wobei ein Kopf der festen Welle (10) höher als das an der Basis (150) montierte bewegliche Element positioniert ist, damit sich das bewegliche Element auch dann auf der festen Welle relativ zur Basis (150) drehen kann, wenn die feste Welle (10) an die Basis gekoppelt ist.

10. Kameraanordnung nach Anspruch 1, ferner umfassend mindestens ein Befestigungselement, das dazu ausgestaltet ist, den Motor (110) fest an das bewegliche Element zu koppeln,
    wobei ein Kopf mindestens eines Befestigungselements in einem Durchgangsloch mit einem Spiel aufgenommen wird, um einen Kontakt zwischen der Basis (150) und dem beweglichen Element ohne Unterbrechung einer Drehbewegung des beweglichen Elements zu gewährleisten.


**Revendications**

1.  Ensemble caméra comprenant :

    un moteur (110) configuré pour générer une puissance d'entraînement ;
    un arbre de moteur (115) configuré pour définir un premier axe (Ax) s'étendant à partir du moteur et pour tourner sous l'effet de la puissance d'entraînement du moteur (110) ;
    une poulie (120) configurée pour tourner sur un deuxième axe (Bx) espacé du premier axe (Ax) en fonction de la rotation de l'arbre de moteur (115) ;
    une courroie (130) configurée pour coupler l'arbre de moteur (115) à la poulie (120) et pour convertir la rotation du moteur en une rotation de la poulie ;
    un module de caméra configuré pour être monté sur la poulie (120) et pour tourner conjointement avec la poulie (120),
    **caractérisé en ce que** l'ensemble caméra inclut en outre
    un élément élastique (140) configuré pour appliquer une force de sollicitation à l'arbre de moteur (115) de telle sorte que l'arbre de moteur (115) soit éloigné du deuxième axe (Bx), une base (150) configurée pour être fixée sur un côté du boîtier de l'ensemble caméra ;
    un élément mobile (160) configuré pour être couplé de manière fixe au moteur (110) et pour être monté de manière rotative sur la base,
    un arbre fixe (10) configuré pour monter de manière rotative l'élément mobile (160) sur un premier point de la base (150) ; et
    un arbre mobile (20a, 20b) configuré pour être couplé à la base (150) en un deuxième point espacé du premier point,
    l'arbre mobile (20a, 20b) comprenant deux arbres mobiles qui sont reçus dans une première fente correspondante et une deuxième fente correspondante, respectivement, et la première fente correspondante et la deuxième fente correspondante sont dans l'élément mobile (160) de manière à supporter le mouvement de glissement de l'élément mobile (160), et
    la première fente correspondante et la deuxième fente correspondante sont allongées dans une direction circonférentielle selon un même rayon de rotation s'étendant à partir du premier point,
    l'ensemble caméra étant configuré pour qu'une tension de la courroie (130) et la force de sollicitation de l'élément élastique (140) soient équilibrées de telle sorte qu'une distance entre le premier axe (Ax) et le deuxième axe (Bx) soit ajustée de manière adaptative, la tension de la courroie (130) étant une force appliquée dans une direction dans laquelle l'arbre de moteur se rapproche du deuxième axe (Bx) et la force de sollicitation de l'élément élastique (140) étant une force appliquée dans une direction dans laquelle l'arbre de moteur (115) s'éloigne du deuxième axe (Bx).

2.  Ensemble caméra selon la revendication 1,
    dans lequel l'arbre fixe (10) est configuré pour être reçu dans une fente correspondante sur la base (150) afin de supporter le mouvement de glissement de l'élément mobile (160).

3.  Ensemble caméra selon la revendication 1, dans lequel l'ensemble caméra est configuré pour que l'arbre mobile (20a, 20b) soit reçu dans la fente sans interférence tout en supportant le mouvement de glissement de l'élément mobile, lorsque l'élément mobile tourne sur l'arbre fixe (10).

4.  Ensemble caméra selon la revendication 1, dans lequel une extrémité de l'élément élastique (140) est couplée à la base (150) et l'autre extrémité de l'élément élastique (140) est couplée à l'élément mobile afin de provoquer une tension dans l'élément élastique (140).

**5.** Ensemble caméra selon la revendication 4, dans lequel le point où l'extrémité de l'élément élastique (140) est couplée à la base est plus éloigné du deuxième axe (Bx) que le point où l'autre extrémité de l'élément élastique (140) est couplée à l'élément mobile.

**6.** Ensemble caméra selon la revendication 1, dans lequel la base (150) a un premier creux et l'élément mobile a un deuxième creux correspondant axialement au premier creux, et l'arbre de moteur (115) passe à travers le premier et le deuxième creux.

**7.** Ensemble caméra selon la revendication 6, dans lequel la courroie (130) s'engage avec l'extrémité de l'arbre de moteur (115) passant à travers le premier et le deuxième creux.

**8.** Ensemble caméra selon la revendication 7, dans lequel un pignon est formé à l'extrémité de l'arbre de moteur (115) et des dents d'engrenage sont formées à la surface circonférentielle extérieure de la poulie (120), et les filets définis à la surface intérieure de la courroie (130) s'engagent avec le pignon et les dents d'engrenage.

**9.** Ensemble caméra selon la revendication 1, dans lequel une tête de l'arbre fixe (10) est positionnée plus haut que l'élément mobile monté sur la base (150) afin de permettre à l'élément mobile de tourner sur l'arbre fixe par rapport à la base (150) même lorsque l'arbre fixe (10) est couplé à la base.

**10.** Ensemble caméra selon la revendication 1, comprenant en outre au moins une attache configurée pour coupler de manière fixe le moteur (110) à l'élément mobile,
dans lequel une tête d'au moins une attache est reçue dans un trou traversant avec un jeu permettant de garantir un contact entre la base (150) et l'élément mobile sans interrompre le mouvement de rotation de l'élément mobile.

EP 3 882 484 B1

**FIG. 1**

100

11

**FIG. 2**

EP 3 882 484 B1

**FIG. 3**

100

13

**FIG. 4**

**FIG. 5**

**FIG. 6**

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013166083 A1
- US 20080012980 A1